# EUROPEAN PATENT SPECIFICATION

(11) **EP 4 170 227 B1**
(45) Date of publication and mention of the grant of the patent: **01.01.2025**
(21) Application number: 20944974.3
(22) Date of filing: 25.11.2020
(51) Int. Cl.: F21K 9/238, F21K 9/232, F21V 23/04, H05B 45/42, F21S 10/02, F21Y 113/13, F21Y 115/10

(54) **COLOR-TEMPERATURE VARIABLE LED FILAMENT LAMP**
LED-GLÜHLAMPE MIT VARIABLER FARBTEMPERATUR
LAMPE À FILAMENT À DEL À TEMPÉRATURE DE COULEURS VARIABLE

(30) Priority: 13.07.2020 CN 202010669403
(43) Date of publication of application: 26.04.2023
(73) Proprietor: Foshan Electrical and Lighting Co., Ltd, Chancheng District Foshan City Guangdong 528000 (CN)
(72) Inventor: HUANG, Fuguo, Foshan, Guangdong 528000 (CN); WEI, Bin, Foshan, Guangdong 528000 (CN); ZHU, Yiguang, Foshan, Guangdong 528000 (CN); CHEN, Danchun, Foshan, Guangdong 528000 (CN); ZHANG, Liangliang, Foshan, Guangdong 528000 (CN)
(74) Representative: Sun, Yiming
(86) International application number: PCT/CN2020/131591
(87) International publication number: WO 2022/011927

(56) References cited:
- CN-A- 111 878 772
- CN-U- 204 345 574
- CN-U- 204 345 574
- CN-U- 204 518 161
- CN-U- 204 853 322
- CN-U- 204 853 322
- CN-U- 207 880 493
- CN-U- 207 880 493
- CN-U- 207 962 134
- CN-U- 207 962 134
- CN-U- 208 331 803
- US-A1- 2018 328 543

## Description

### TECHNICAL FIELD

The present invention relates to the technical field of lighting equipment, and in particular to a light emitting diode (LED) filament lamp with a variable color temperature.

### BACKGROUND

LED lamps have the advantages of high efficiency and energy saving, have replaced incandescent lamps and electronic energy-saving lamps, and become mainstream lighting products. Compared with conventional surface mount device (SMD) LED lamps, LED filament lamps have bulbs with the characteristics of all-round light, high luminous efficiency, and glass casing, which are closer to the lighting experience of traditional incandescent lamps. Once launched, the LED filament lamps have been greatly welcomed by the market and are now a mainstream product in the lighting market. In addition, compared with traditional incandescent lamps, the LED lamps have a wide range of color temperatures, can achieve a variety of color temperatures, and are very easy to mix colors, thereby having great development potential.

There are many smart products that can realize stepless color matching, but the stepless color matching is expensive and cannot meet the market demand.

CN 207 880 493 U discloses a light emitting diode (LED) filament lamp with a variable color-temperature, comprising a lamp cap, a casing, a stem, an LED filament, and a driving power supply. Further, the LED filament comprises a first substrate, a second substrate, a first LED chip set arranged on the first substrate, and a second LED chip set arranged on the second substrate.

CN 207 962 134 U discloses a color-temperature-changed LED filament lamp with improved lifespan and stability of the filament. Specifically, in order to improve the lifespan and stability, LED chips are CSP-packaged, and protective diodes are installed. This LED filament lamp comprises a substrate and two parallel circuits on the substrate.

CN 204 853 322 U discloses a dual-line-controlled LED light tube, comprising a dual-color light emitting unit, which is connected in parallel between power sources with convertible polarity. The dual-color light emitting unit comprises isolation diodes, LED beads, and a voltage-sharing resistor.

### SUMMARY

The technical problem to be solved by the present invention is to provide an LED filament lamp with a variable color temperature, which can realize switching of different color temperatures with low cost and simple operation.

In order to solve the above technical problem, the present invention provides the technical solution as defined in claim 1 as attached. Preferred embodiments of the invention are defined in claims as attached and dependent upon claim 1.Preferably, an accommodating cavity may be formed inside the mounting piece.

The driving power supply may be arranged inside the accommodating cavity, and may be electrically connected to the DIP switch and the LED filament.

Preferably, the stem may include a stem body and a metal guide wire penetrating the stem body.

The metal guide wire may penetrate the stem body, one terminal of the metal guide wire may be connected to the driving power supply, and the other terminal of the metal guide wire may be connected to the LED filament.

Preferably, the first LED chip set may include a plurality of first LED chips connected to each other and a first fluorescent glue covering all the first LED chips, a positive pole of the first LED chip may be connected to the first pin, and a negative pole of the first LED chip may be connected to the second pin.

Preferably, the second LED chip set may include a plurality of second LED chips connected to each other and a second fluorescent glue covering all the second LED chips, a positive pole of the second LED chip may be connected to the second pin, and a negative pole of the second LED chip may be connected to the first pin.

Preferably, the first LED chip and the second LED chip may have different color temperatures, or the first fluorescent glue and the second fluorescent glue may have different color temperatures.

Preferably, the DIP switch may be connected to the first pin and the second pin through the metal guide wire.

Preferably, the cavity may be filled with gas for heat dissipation.

Compared with the prior art, the present invention has the following beneficial effects:

In the LED filament lamp with a variable color temperature provided by the present disclosure, the LED filament is of an integral structure. Through the arrangement of the DIP switch or the control switch, the first pin and the second pin can switch the positive pole or the negative pole of the output terminal of the driving power supply, thereby realizing switching of different color temperatures. The LED filament lamp is convenient for users, simple in structure, and low in cost.

### BRIEF DESCRIPTION OF THE DRAWINGS

FIG. 1 is an exploded view of an LED filament lamp with a variable color temperature provided by the present invention;
FIG. 2 is a schematic structural diagram of an LED filament of the LED filament lamp with a variable color temperature provided by the present invention;
FIG. 3 is a schematic diagram of an internal structure of the LED filament of the LED filament lamp with a variable color temperature provided by the present invention;
FIG. 4 is a principle diagram of the LED filament lamp with a variable color temperature provided by the present invention;
FIG. 5 is a schematic structural diagram of another implementation of the LED filament lamp with a variable color temperature which is not covered by the claims;
FIG. 6 is a schematic structural diagram of another implementation of the LED filament lamp with a variable color temperature which is not covered by the claims; and
FIG. 7 is a principle diagram of another implementation of the LED filament lamp with a variable color temperature which is not covered by the claims.

### DETAILED DESCRIPTION

To enable those skilled in the art to better understand the technical solutions of the present invention, the present invention will be further described in detail below with reference to the accompanying drawings and the preferred embodiment.

### Embodiment I

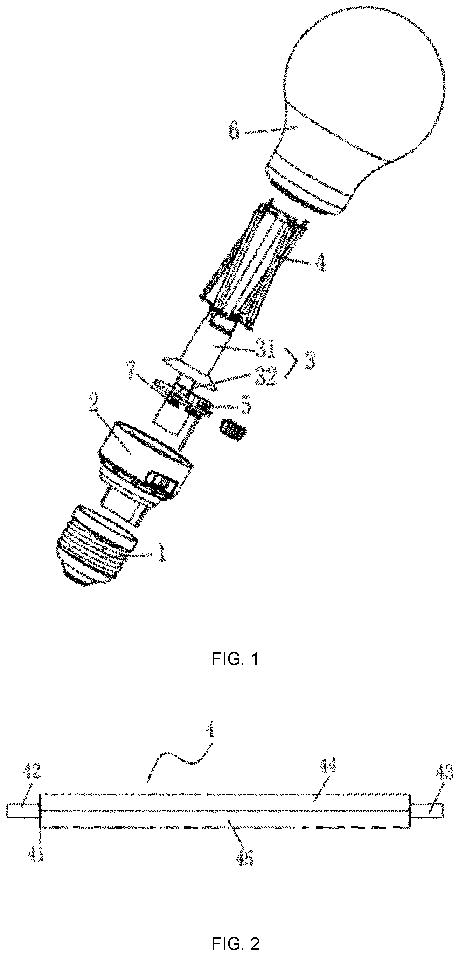

As shown in FIG. 1 to FIG. 3, an LED filament lamp with a variable color temperature includes a lamp cap 1, a mounting piece 2 connected to the lamp cap 1, a casing 6 connected to the mounting piece 2, a stem 3 arranged in the casing 6, an LED filament 4 arranged on the stem 3, a DIP switch 5 connected to the stem 3, and a driving power supply 7 connected to the DIP switch. The casing 6 and the stem 3 are sealingly connected to form a closed cavity, and the LED filament 4 is located inside the cavity.

The LED filament 4 includes a substrate 41, a first pin 42 arranged at one end of the substrate 41, a second pin 43 arranged at the other end of the substrate 41, a first LED chip set 44 arranged on the substrate 41, and a second LED chip set 45 arranged on the substrate 41. A positive pole of the first LED chip set 44 and a negative pole of the second LED chip set 45 are connected to the first pin 42. A negative pole of the first LED chip set 44 and a positive pole of the second LED chip set 45 are connected to the second pin 43.

The DIP switch 5 is arranged on the driving power supply 7, and is a double-pole double-throw switch used to switch positive and negative poles of an output terminal of the driving power supply 7.

The lamp cap 1 is used to realize connection between the filament lamp and an external power supply. It may be a bayonet lamp cap or a threaded lamp cap, which can be selected according to the actual needs.

The mounting piece 2 is connected to the lamp cap 1. An accommodating cavity is formed inside the mounting piece. The accommodating cavity is used to accommodate a lower half of the stem 3 and the DIP switch 5, so as to ensure that there is enough space inside the filament lamp to mount the above components.

In order to ensure normal operation of the LED filament 4, the driving power supply 7 is arranged inside the accommodating cavity, and is electrically connected to the DIP switch 5 and the LED filament 4 through wires or other electrical connectors.

The stem 3 is used to mount the LED filament 4 and realize electrical connection between the driving power supply 7 and the LED filament 4, and includes a stem body 31 and a metal guide wire 32 penetrating the stem body 31. The stem body 31 and the casing 6 are sealingly connected to form the closed cavity. The LED filament 4 is located inside the cavity to protect the LED filament 4 and improve the service life of the filament lamp. The metal guide wire 32 penetrates the stem body 31, one terminal of the metal guide wire is connected to the driving power supply 7, and the other terminal of the metal guide wire is connected to the LED filament 4, thereby realizing the electrical connection between the LED filament 4 and the driving power supply 7.

The LED filament 4 includes the substrate 41, the first pin 42 arranged at one end of the substrate 41, the second pin 43 arranged at the other end of the substrate 41, the first LED chip set 44 arranged on the substrate 41, and the second LED chip set 45 arranged on the substrate 41. The substrate 41 is used to assemble the first pin 42, the second pin 43, the first LED chip set 44, and the second LED chip set 45, so as to facilitate the assembly of the LED filament 4 into an integral structure. The first pin 42 is arranged at the one end of the substrate 41 and is electrically connected to the metal guide wire 32, thereby realizing the electrical connection of the LED filament 4. The second pin 43 is arranged at the other end the substrate 41, and the second pin and the first pin 42 respectively form positive and negative poles of the LED filament 4.

The first LED chip set 44 is arranged on the substrate for lighting, and includes a plurality of first LED chips connected to each other anda first fluorescent glue covering all the first LED chips, a positive pole of the first LED chip is connected to the first pin 42 through a metal wire, and a negative pole of the first LED chip is connected to the second pin 43 through a metal wire, such that the first LED chip set 44 is mounted.

Correspondingly, the second LED chip set 45 is arranged on the substrate 41 for lighting, and includes a plurality of second LED chips connected to each other and asecond fluorescent glue covering all the second LED chips, a positive pole of the second LED chip is connected to the second pin 43 through a metal wire, and a negative pole of the second LED chip is connected to the first pin 42 through a metal wire, such that the second LED chip set 45 is mounted.

In order to realize the LED filament lamp with a variable color temperature, the first LED chip set 44 and the second LED chip set 45 have different color temperatures, and specifically, the first LED chip and the second LED chip have different color temperatures, or the first fluorescent glue and the second fluorescent glue have different color temperatures, such that LED filaments with different color temperatures are obtained.

The DIP switch 5 is arranged on the driving power supply 7, and is connected to the metal guide wire 32, that is, the DIP switch 5 is connected to the first pin 42 and the second pin 43 through the metal guide wire 32, which is used to switch positive and negative poles of the first pin 42 and the second pin 43, so as to selectively illuminate the first LED chip set 44 or the second LED chip set 45.

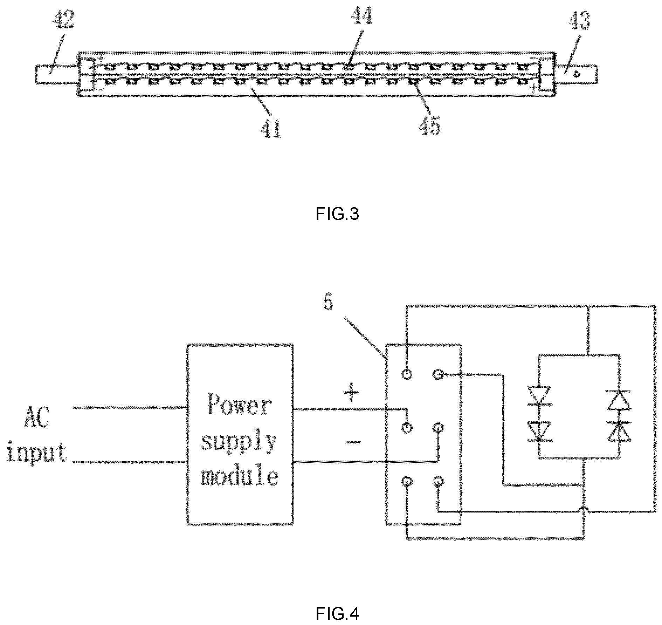

It should be noted that as shown in FIG. 4, the DIP switch is a double-pole double-throw switch. Since the DIP switch 5 is connected to the driving power supply 7, when it is connected to the positive pole of the driving power supply 7 and the first pin 42, it will be connected to the negative pole of the driving power supply 7 and the second pin 43 at the same time. Since the positive pole of the first LED chip set 44 is connected to the first pin 42, and the negative pole is connected to the second pin 43, the first LED chip set 44 is forward and is illuminated. The negative pole of the second LED chip set 45 is connected to the first pin 42, and the positive pole is connected to the second pin, and therefore, the second LED chip set 45 is reversed and is not illuminated. Correspondingly, when the DIP switch 5 is connected to the negative pole of the driving power supply 7 and the first pin 42, it will be connected to the positive pole of the driving power supply 7 and the second pin 43 at the same time. Since the negative pole of the second LED chip is connected to the first pin 42, and the positive pole is connected to the second pin, the second LED chip set 45 is forward and is illuminated, and the first LED chip set 44 is reversed and is not illuminated.

The present invention realizes the switching of different color temperatures through the simple DIP switch 5, has a simple structure, and is practical and convenient for consumers.

The casing 6 and the stem are sealingly connected to form the closed cavity. In order to improve the heat dissipation efficiency, the cavity can also be filled with gas for heat dissipation which is helium or a mixture of helium and oxygen to protect the service life of the LED filament.

In the LED filament lamp with a variable color temperature provided by the present invention, the LED filament is of an integral structure. Through the arrangement of the DIP switch 5, the first pin 42 and the second pin 43 can switch the positive pole or the negative pole of the output terminal of the driving power supply according to actual needs, thereby realizing the switching of different color temperatures. The LED filament lamp is convenient for users, simple in structure, and low in cost.

### Embodiment II (not covered by the claims)

The DIP switch in the above embodiment is a mechanical switch, that is, the color temperature of the LED filament needs to be adjusted manually. For some filament lamps whose color temperatures need to be changed frequently and which are installed at high places, the above embodiment brings some inconvenience to the user. On the basis of this, the present embodiment solves the above problem through the arrangement of electronic switches.

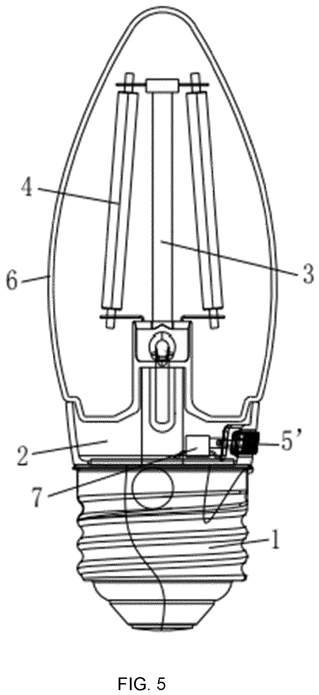

The technical solution of the present embodiment is basically the same as that of Embodiment I, except that an electronic switch is used to replace the DIP switch, specifically: as shown in FIG. 5, an LED filament lamp with a variable color temperature includes a lamp cap 1, a casing 6, a mounting piece 2 connected to the lamp cap 1, a stem 3 arranged in the casing 6, an LED filament 4 arranged on the stem 3, a control switch 5' connected to the stem 3, and a driving power supply 7 connected to the control switch 5'. The casing 6 and the stem 3 are sealingly connected to form a closed cavity, and the LED filament 4 is located inside the cavity.

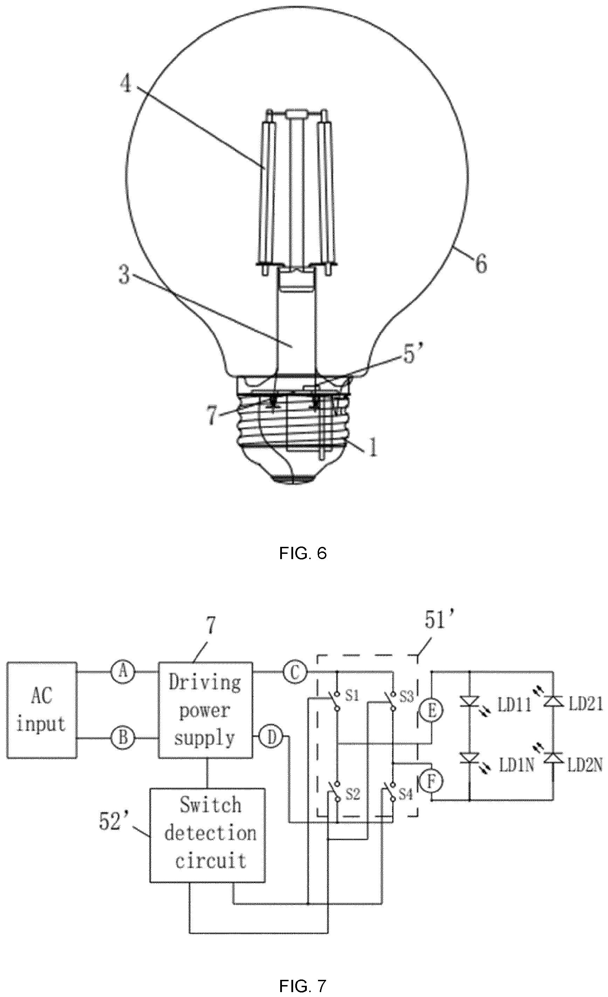

As shown in FIG. 6, in other implementations, the driving power supply 7 may be directly arranged in the lamp cap 1 without the mounting piece, and then the control switch may be arranged on the driving power supply 7, which is not limited to the present embodiment.

As shown in FIG. 2, the LED filament 4 includes a substrate 41, a first pin 42 arranged at one end of the substrate 41, a second pin 43 arranged at the other end of the substrate 41, a first LED chip set 44 arranged on the substrate 41, and a second LED chip set 45 arranged on the substrate 41. A positive pole of the first LED chip set 44 and a negative pole of the second LED chip set 45 are connected to the first pin 42. A negative pole of the first LED chip set 44 and a positive pole of the second LED chip set 45 are connected to the second pin 43.

The control switch 5' is arranged on the driving power supply 7, and the control switch 5' is connected to the first pin 42 and the second pin 43.

As shown in FIG. 7, the control switch 5' includes two groups of electronic switches 51' and a switch detection circuit 52' respectively connected to the two groups of electronic switches 51'. The two groups of electronic switches 51' are electrically connected to the first LED chip set 44 and the second LED chip set 45 respectively, so as to enable or disable the first LED chip set 44 and the second LED chip set 45.

Specifically, the two groups of electronic switches 51' are composed of four switches (a switch S1, a switch S2, a switch S3, and a switch S4). The switch is a triode or a MOS tube. The two groups of electronic switches 51' are respectively a first electronic switch group and a second electronic switch group. The first electronic switch group is electrically connected to the first LED chip set 44, and as shown in FIG. 7, the first electronic switch group is composed of two switches, namely the switch S1 and the switch S4 respectively. The second electronic switch group is electrically connected to the second LED chip set 45, and is composed of two switches, namely the switch S2 and the switch S3 respectively.

The four switches form a bridge circuit respectively connected to an output terminal of the driving power supply, the first pin, and the second pin.

The switch detection circuit 52' receives an external signal and is used for on-off control of the first electronic switch group and the second electronic switch group, and its model is SM2212EK.

During operation, when the switch detection circuit 52' turns on the first electronic switch group, the second electronic switch group is turned off, and the electrical signal of the driving power supply sequentially passes through the switch S1, the first LED chip set, and the switch S4 to form a loop, such that the first LED chip set is illuminated.

When the switch detection circuit 52' turns on the second electronic switch group, the first electronic switch group is turned off, and the electrical signal of the driving power supply sequentially passes through the switch S3, the second LED chip set, and the switch S2 to form a loop, such that the second LED chip set is illuminated.

The control switch 5' receives the external switch signal, turns on the first electronic switch group and illuminates the first LED chip set, or turns on the second electronic switch group and illuminates the second LED chip set, thereby realizing intelligent switching of color temperatures of the LED filament, which is convenient to use.

In the LED filament lamp with a variable color temperature provided by the present disclosure, the LED filament is of an integral structure. Through the arrangement of the control switch 5', the first pin 42 and the second pin 43 can switch the positive pole or the negative pole of the output terminal of the driving power supply according to actual needs, thereby realizing intelligent switching of different color temperatures. The LED filament lamp is convenient for users.

## Claims

1. A light emitting diode (LED) filament lamp with a variable color temperature, comprising a lamp cap (1), a mounting piece (2) connected to the lamp cap (1), a casing (6) connected to the mounting piece (2), a stem (3) arranged in the casing (6), an LED filament (4) arranged on the stem (3), a dual in line package (DIP) switch (5) connected to the stem (3), and a driving power supply (7) connected to the DIP switch (5), wherein the casing (6) and the stem (3) are sealingly connected to form a closed cavity, and the LED filament (4) is located inside the cavity;
the LED filament (4) comprises a substrate (41), a first pin (42) arranged at one end of the substrate (41), a second pin (43) arranged at the other end of the substrate (41), a first LED chip set (44) arranged on the substrate (41), and a second LED chip set (45) arranged on the substrate (41), a positive pole of the first LED chip set (44) and a negative pole of the second LED chip set (45) are connected to the first pin (42), and a negative pole of the first LED chip set (44) and a positive pole of the second LED chip set (45) are connected to the second pin (43); and
the DIP switch (5) is arranged on the driving power supply (7), and is a double-pole double-throw switch used to switch positive and negative poles of an output of the driving power supply (7).

2. The LED filament lamp with a variable color temperature according to claim 1, wherein an accommodating cavity is formed inside the mounting piece (2); and
the driving power supply (7) is arranged inside the accommodating cavity, and is electrically connected to the DIP switch (5) and the LED filament (4).

3. The LED filament lamp with a variable color temperature according to claim 2, wherein the stem (3) comprises a stem body (31) and a metal guide wire (32) penetrating the stem body (31); and
the metal guide wire (32) penetrates the stem body (31), one terminal of the metal guide wire (32) is connected to the driving power supply (7), and the other terminal of the metal guide wire (32) is connected to the LED filament (4).

4. The LED filament lamp with a variable color temperature according to claim 1, wherein the first LED chip set (44) comprises a plurality of first LED chips connected to each other and a first fluorescent glue covering all the first LED chips, a positive pole of the first LED chip is connected to the first pin (42), and a negative pole of the first LED chip is connected to the second pin (43).

5. The LED filament lamp with a variable color temperature according to claim 4, wherein the second LED chip set (45) comprises a plurality of second LED chips connected to each other and a second fluorescent glue covering all the second LED chips, a positive pole of the second LED chip is connected to the second pin (43), and a negative pole of the second LED chip is connected to the first pin (42).

6. The LED filament lamp with a variable color temperature according to claim 5, wherein the first LED chip and the second LED chip have different color temperatures, or the first fluorescent glue and the second fluorescent glue have different color temperatures.

7. The LED filament lamp with a variable color temperature according to claim 3, wherein the DIP switch (5) is connected to the first pin (42) and the second pin (43) through the metal guide wire (32).

8. The LED filament lamp with a variable color temperature according to claim 3, wherein the cavity is filled with gas for heat dissipation.

## Patentansprüche

1. Leuchtdioden-(LED-)Glühlampe mit variabler Farbtemperatur, umfassend einen Lampensockel (1), ein Montagestück (2), das mit dem Lampensockel (1) verbunden ist, ein Gehäuse (6), das mit dem Montagestück (2) verbunden ist, einen Schaft (3), der in dem Gehäuse (6) angeordnet ist, ein LED-Filament (4), das auf dem Schaft (3) angeordnet ist, einen Dual-In-Line-Package-(DIP-)Schalter (5), der mit dem Schaft (3) verbunden ist und eine Antriebsleistungsversorgung (7), die mit dem DIP-Schalter (5) verbunden ist, wobei das Gehäuse (6) und der Schaft (3) abdichtend verbunden sind, um einen geschlossenen Hohlraum auszubilden und das LED-Filament (4) innerhalb des Hohlraums angeordnet ist;
das LED-Filament (4) ein Substrat (41), einen ersten Stift (42), der an einem Ende des Substrats (41) angeordnet ist, einen zweiten Stift (43), der an dem anderen Ende des Substrats (41) angeordnet ist, einen ersten LED-Chipsatz (44), der auf dem Substrat (41) angeordnet ist, und einen zweiten LED-Chipsatz (45), der auf dem Substrat (41) angeordnet ist, umfasst, wobei ein Pluspol des ersten LED-Chipsatzes (44) und ein Minuspol des zweiten LED-Chipsatzes (45) mit dem ersten Stift (42) verbunden sind und ein Minuspol des ersten LED-Chipsatzes (44) und ein Pluspol des zweiten LED-Chipsatzes (45) mit dem zweiten Stift (43) verbunden sind; und
der DIP-Schalter (5) an der Antriebsleistungsversorgung (7) angeordnet ist und ein zweipoliger Umschalter ist, der zum Umschalten der Plus- und Minuspole eines Ausgangs der Antriebsleistungsversorgung (7) verwendet wird.

2. LED-Glühlampe mit variabler Farbtemperatur nach Anspruch 1, wobei ein Aufnahmehohlraum im Inneren des Montagestücks (2) ausgebildet ist; und
die Antriebsleistungsversorgung (7) im Inneren des Aufnahmehohlraums angeordnet ist und mit dem DIP-Schalter (5) und dem LED-Filament (4) elektrisch verbunden ist.

3. LED-Glühlampe mit variabler Farbtemperatur nach Anspruch 2, wobei der Schaft (3) einen Schaftkörper (31) und einen Metallführungsdraht (32) umfasst, der den Schaftkörper (31) durchdringt; und
der Metallführungsdraht (32) den Schaftkörper (31) durchdringt, ein Anschluss des Metallführungsdrahtes (32) mit der Antriebsleistungsversorgung (7) verbunden ist und der andere Anschluss des Metallführungsdrahtes (32) mit dem LED-Filament (4) verbunden ist.

4. LED-Glühlampe mit variabler Farbtemperatur nach Anspruch 1, wobei der erste LED-Chipsatz (44) eine Vielzahl von ersten LED-Chips umfasst, die miteinander verbunden sind, und einen ersten fluoreszierenden Klebstoff umfasst, der alle ersten LED-Chips bedeckt, wobei ein Pluspol des ersten LED-Chips mit dem ersten Stift (42) verbunden ist und ein Minuspol des ersten LED-Chips mit dem zweiten Stift (43) verbunden ist.

5. LED-Glühlampe mit variabler Farbtemperatur nach Anspruch 4, wobei der zweite LED-Chipsatz (45) eine Vielzahl von zweiten LED-Chips umfasst, die miteinander verbunden sind, und einen zweiten fluoreszierenden Klebstoff umfasst, der alle zweiten LED-Chips bedeckt, wobei ein Pluspol des zweiten LED-Chips mit dem zweiten Stift (43) verbunden ist und ein Minuspol des zweiten LED-Chips mit dem ersten Stift (42) verbunden ist.

6. LED-Glühlampe mit variabler Farbtemperatur nach Anspruch 5, wobei der erste LED-Chip und der zweite LED-Chip unterschiedliche Farbtemperaturen aufweisen oder der erste fluoreszierende Klebstoff und der zweite fluoreszierende Klebstoff unterschiedliche Farbtemperaturen aufweisen.

7. LED-Glühlampe mit variabler Farbtemperatur nach Anspruch 3, wobei der DIP-Schalter (5) mit dem ersten Stift (42) und dem zweiten Stift (43) über den Metallführungsdraht (32) verbunden ist.

8. LED-Glühlampe mit variabler Farbtemperatur nach Anspruch 3, wobei der Hohlraum zur Wärmeableitung mit Gas gefüllt ist.

## Revendications

1. Lampe à filament à diode électroluminescente (LED) à température de couleur variable, comprenant un culot de lampe (1), une pièce de montage (2) connectée au culot de lampe (1), un boîtier (6) connecté à la pièce de montage (2), une tige (3) disposée dans le boîtier (6), un filament LED (4) disposé sur la tige (3), un commutateur (DIP) à double rangée de connexions (5) connecté à la tige (3), et une l'alimentation électrique de commande(7) connectée à l'interrupteur DIP (5), le boîtier (6) et la tige (3) étant connectés hermétiquement pour former une cavité fermée, et le filament LED (4) se trouvant à l'intérieur de la cavité ;
le filament LED (4) comprenant un substrat (41), une première broche (42) disposée à une extrémité du substrat (41), une seconde broche (43) disposée à l'autre extrémité du substrat (41), un premier jeu de puces LED (44) disposé sur le substrat (41), et un second jeu de puces LED (45) disposé sur le substrat (41), un pôle positif du premier jeu de puces LED (44) et un pôle négatif du second jeu de puces LED (45) étant connectés à la première broche (42), et un pôle négatif du premier jeu de puces LED (44) et un pôle positif du second jeu de puces LED (45) étant connectés à la seconde broche (43) ; et
le commutateur DIP (5) étant disposé sur l'alimentation électrique de commande(7) et étant un commutateur bipolaire bidirectionnel utilisé pour commuter les pôles positif et négatif d'une sortie de l'alimentation électrique de commande(7).

2. Lampe à filament LED à température de couleur variable selon la revendication 1, dans laquelle une cavité de réception est formée à l'intérieur de la pièce de montage (2) ; et
l'alimentation électrique de commande(7) est disposée à l'intérieur de la cavité de réception, et est connectée électriquement au commutateur DIP (5) et au filament LED (4).

3. Lampe à filament LED à température de couleur variable selon la revendication 2, dans laquelle la tige (3) comprend un corps de tige (31) et un fil de guidage métallique (32) pénétrant dans le corps de tige (31) ; et
le fil de guidage métallique (32) pénètre dans le corps de tige (31), une borne du fil de guidage métallique (32) est connectée à l'alimentation électrique de commande(7), et l'autre borne du fil de guidage métallique (32) est connectée au filament LED (4).

4. Lampe à filament LED à température de couleur variable selon la revendication 1, dans laquelle le premier ensemble de puces LED (44) comprend une pluralité de premières puces LED connectées les unes aux autres et une première colle fluorescente recouvrant toutes les premières puces LED, un pôle positif de la première puce LED est connecté à la première broche (42), et un pôle négatif de la première puce LED est connecté à la seconde broche (43).

5. Lampe à filament LED à température de couleur variable selon la revendication 4, dans laquelle le second ensemble de puces LED (45) comprend une pluralité de secondes puces LED connectées les unes aux autres et une seconde colle fluorescente recouvrant toutes les secondes puces LED, un pôle positif de la seconde puce LED est connecté à la seconde broche (43), et un pôle négatif de la seconde puce LED est connecté à la première broche (42).

6. Lampe à filament LED à température de couleur variable selon la revendication 5, dans laquelle la première puce LED et la seconde puce LED ont des températures de couleur différentes, ou la première colle fluorescente et la seconde colle fluorescente ont des températures de couleur différentes.

7. Lampe à filament LED à température de couleur variable selon la revendication 3, dans laquelle le commutateur DIP (5) est connecté à la première broche (42) et à la seconde broche (43) par l'intermédiaire du fil métallique de guidage (32).

8. Lampe à filament LED à température de couleur variable selon la revendication 3, dans laquelle la cavité est remplie de gaz pour la dissipation de chaleur.
